(19) **Europäisches Patentamt European Patent Office Office européen des brevets**

(11) **EP 4 286 843 B1**

(12) **EUROPEAN PATENT SPECIFICATION**

(45) Date of publication and mention of the grant of the patent:
**18.03.2026 Bulletin 2026/12**

(21) Application number: **22896023.3**

(22) Date of filing: **15.11.2022**

(51) International Patent Classification (IPC):
$G01N\ 31/12^{(2006.01)}$      $H01M\ 4/505^{(2010.01)}$
$H01M\ 4/525^{(2010.01)}$      $H01M\ 4/58^{(2010.01)}$
$G01N\ 21/68^{(2006.01)}$      $G01N\ 21/73^{(2006.01)}$
$G01N\ 31/16^{(2006.01)}$      $H01M\ 4/02^{(2006.01)}$

(52) Cooperative Patent Classification (CPC):
**G01N 31/12; H01M 4/505; H01M 4/525; H01M 4/5825;** G01N 21/68; G01N 21/73; G01N 31/168; H01M 2004/028; Y02E 60/10

(86) International application number:
**PCT/KR2022/017993**

(87) International publication number:
**WO 2023/090817 (25.05.2023 Gazette 2023/21)**

(54) **METHOD FOR ANALYSIS OF RESIDUAL LITHIUM COMPOUNDS IN POSITIVE ELECTRODE ACTIVE MATERIAL**

VERFAHREN ZUR ANALYSE VON LITHIUMRESTVERBINDUNGEN IN POSITIVEM ELEKTRODENAKTIVMATERIAL

PROCÉDÉ D'ANALYSE DE COMPOSÉS DE LITHIUM RÉSIDUELS DANS UN MATÉRIAU ACTIF D'ANODE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **16.11.2021   KR 20210157632**
**14.11.2022   KR 20220151580**

(43) Date of publication of application:
**06.12.2023 Bulletin 2023/49**

(73) Proprietor: **LG Chem, Ltd.**
**Seoul 07336 (KR)**

(72) Inventors:
• **KIM, Kyeongrak**
**Daejeon 34122 (KR)**
• **LEE, Dong Wook**
**Daejeon 34122 (KR)**
• **JUNG, Min Hwan**
**Daejeon 34122 (KR)**
• **SEO, Youkyong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
WO-A1-2021/025370      JP-A- 2015 018 803
KR-A- 20170 048 244      KR-A- 20200 090 125
KR-A- 20200 143 763      US-A1- 2019 058 191

## Description

### TECHNICAL FIELD

The present disclosure relates to a method for analyzing a residual lithium compound not involved in charging and discharging in a cathode active material for a lithium secondary battery.

### BACKGROUND ART

A lithium secondary battery generally has the structure that an electrode assembly comprising a cathode and an anode containing an electrode active material capable of intercalating/discharging lithium ions, and a separator for separating the two electrodes is impregnated with an electrolyte solution as a medium of transferring lithium ions. The battery is charged and discharged as lithium ions move between the anode and cathode through the electrolyte. The electrode is generally manufactured by coating a foil-shaped current collector with a slurry containing an electrode material (e.g., an active material, a conductive material and a binder) to dry same, and forming an active material layer through a pressing process.

The performance of such a secondary battery is influenced by various factors (e.g., the components such as a cathode, an anode, a separator and an electrolyte, the composition of each component, and charging and discharging characteristics thereof). In particular, since a lithium by-product generated during the manufacturing process of the cathode active material, i.e., a residual lithium compound present in the cathode active material but not involved in charging and discharging, may impair the performance of the cathode, analysis on the lithium by-product is important for evaluating the performance of the battery.

In general, LiOH, $Li_2CO_3$, $Li_2SO_4$, and $Li_2O$ are regarded as four major residual compounds of the cathode active material. Conventionally, a wet method of stirring a cathode active material sample in water to elute a residual compound and then measuring the pH of the filtrate was performed in order to analyze the residual components.

However, this wet method has the problems that, since $Li_2O$ mostly turns into LiOH when in contact with water, $Li_2O$ and LiOH are hardly distinguished from each other; and, since the pH of $Li_2SO_4$ cannot be measured, only the pH of LiOH and $Li_2CO_3$ among the four residual compounds are measured. In addition, when other metals are coated on the surface of the cathode active material, multiple peaks rather than a single peak appear during pH titration, which renders accurate analysis difficult.

KR 20200143763 A discloses an analysis method for cathode impurities and water-soluble coating substance.

WO 20210/25370 A1 discloses a cathode active material for lithium secondary battery.

KR 20170048244 A discloses a lithium metal composite oxide powder.

US 2019/058191 A1 discloses a lithium metal composite oxide having a layered structure.

JP 2015018803 A discloses a cathode active material, a method of producing the same, and a cathode and lithium secondary battery employing the same.

KR 20200090125 A discloses an analysis method for a positive electrode material.

### SUMMARY OF INVENTION

### TECHNICAL PROBLEM

Accordingly, the object of the present disclosure is to provide a method for analyzing all four residual lithium compounds of LiOH, $Li_2CO_3$, $Li_2SO_4$ and $Li_2O$ present in a cathode active material for a lithium secondary battery.

### TECHNICAL SOLUTION

An aspect of the present invention provided is a method according to claim 1 for analyzing residual lithium compounds in the cathode active material for the lithium secondary battery, an analysis method comprising the following steps:

analyzing a cathode active material sample with an oxygen nitrogen hydrogen analyzer (ONH analyzer) and a Karl Fischer analyzer to measure the amount of an H component;
analyzing the sample with a carbon-sulfur analyzer (CS analyzer) to measure the amounts of C and S components;
analyzing the sample with an inductively coupled plasma optical emission spectrometer (ICP-OES) to measure the amount of a Li component; and
calculating each amount of LiOH, $Li_2CO_3$ and $Li_2SO_4$ in the sample by using the measurement results of the H, C and S components, and calculating the amount of $Li_2O$ in the sample by using the measurement results of the Li component.

An aspect of the present invention provides a process of measuring the amount of H by the ONH and Karl Fischer analysis methods when calculating the amount of LiOH in the cathode active material and then correcting for changes in the amount due to moisture.

A further embodiment is disclosed in the dependent claim.

## ADVANTAGEOUS EFFECTS OF INVENTION

According to an aspect of the present invention, the cathode active material sample is subjected to ONH analysis, CS analysis and ICP-OES analysis, respectively, and the amounts of all four residual lithium compounds (i.e., LiOH, $Li_2CO_3$, $Li_2SO_4$ and $Li_2O$) present in the cathode active material may be analyzed by using the amounts of H, C, S, and Li measured therefrom. In particular, unlike a conventional wet method through pH titration, the ONH analysis and CS analysis are performed in a dry method such that the amounts of $Li_2O$ and LiOH are separately measured, and the amount of $Li_2SO_4$ not pH titrated in the wet method is also measured, thereby contributing to accurate evaluation of the performance of the lithium secondary battery.

## DETAILED DESCRIPTION OF THE INVENTION

The terms or words used in the specification and claims of the present invention should not be construed as being limited to have ordinary or dictionary meanings, but be interpreted to have meanings and concepts consistent with the technical idea of the present invention, based on the principle that the inventor(s) of a patent may appropriately define the concept of terms in order to explain the invention in the best way.

In addition, the features exemplified in the embodiments described in the specification of the present invention are only one of the most preferred embodiments of the present invention and do not represent all of the technical ideas of the present invention.

One embodiment of the present invention relates to a method for analyzing all residual lithium compounds (i.e., LiOH, $Li_2CO_3$, $Li_2SO_4$ and $Li_2O$) in the cathode active material for the lithium secondary battery.

The cathode active material to be analyzed by an embodiment of the present invention is a compound in which lithium ions are intercalated in a cathode of a lithium secondary battery, which may comprise, for example, at least one selected from the group consisting of $LiCoO_2$, $LiNiO_2$, $LiMn_2O_4$, $LiCoPO_4$, $LiFePO_4$, and $LiNi_{1-x-y-z}Co_xM1_yM2_zO_2$ (wherein M1 and M2 are independently any one selected from the group consisting of Al, Ni, Co, Fe, Mn, V, Cr, Ti, W, Ta, Mg and Mo; and x, y, and z are independently atomic fractions of oxide composition elements, and $0 \leq x < 0.5$, $0 \leq y < 0.5$, $0 \leq z < 0.5$, and $0 < x+y+z \leq 1$).

Such a cathode active material is produced into a crystal having a cubic spinel structure or a layered structure by mixing a precursor solution containing transition metals such as Ni, Co and Mn with a lithium source (e.g., $Li_2CO_3$, $LiNO_3$, $Li_2O$ and $Li_2SO_4$) and heat-treating the mixture at a temperature of 900 °C or higher. Li not contained in the crystal structure may react with $CO_2$ present in the air during the heat treatment process to become $Li_2CO_3$ or may react with water to generate LiOH. In addition, the unreacted lithium source used to produce the active material may remain on the surface of the final active material. In general, four lithium compounds (i.e., LiOH, $Li_2CO_3$, $Li_2SO_4$ and $Li_2O$) are regarded as by-products present in the cathode active material but not involved in charging and discharging. In order to secure the performance of the cathode, accurate analysis on the four residual lithium compounds is required.

To this end, in the present application, the cathode active material samples are prepared and introduced into an oxygen nitrogen hydrogen analyzer (ONH analyzer) and a carbon-sulfur analyzer (CS analyzer) operated in a dry method, and an ICP-OES analyzer operated in a wet method, respectively, to measure the amounts of H, C, S and Li components and calculate the amounts of LiOH, $Li_2CO_3$, $Li_2SO_4$ and $Li_2O$ through the measured values.

Specifically, the ONH analyzer is a device for detecting oxygen, nitrogen and hydrogen gas components discharged after melting the samples in a heating furnace, and the cathode active material samples may be introduced in the form of dried particles into the ONH analyzer commonly used in the art to measure the amount of the H component contained in the samples.

The CS analyzer is a device for detecting the amounts of carbon and sulfur produced by burning samples in an oxygen stream, and the cathode active material samples may be introduced in the form of dried particles together with a flame retardant into the ceramic heating furnace of the CS analyzer commonly used in the art, and oxygen gas may be supplied from a device for inducing a high frequency to measure the amounts of the C component and S component contained in the samples.

When using the ONH analyzer and the CS analyzer, the cathode active material samples do not contact with moisture allowing the amounts of $Li_2O$ and LiOH to be separately measured. As such, this method may overcome the limitation of the conventional analysis method of measuring the amount of residual lithium in the cathode active material by using pH titration in a wet method where $Li_2O$ changes to LiOH due to contact with moisture such that only the total amounts of LiOH and $Li_2CO_3$ may be measured. In addition, $Li_2SO_4$ that is not pH titrated in the wet method may be analyzed by using the amount of the S component measured by the CS analyzer.

In one embodiment of the present invention, the amount of LiOH is calculated by using the results of the H component measured by the ONH analysis, and the calculated amount of LiOH may be 0.1 to 0.4% by weight, based on the total weight of the cathode active material.

In addition, the amounts of $Li_2CO_3$ and $Li_2SO_4$ are calculated by using the results of the C component and the S component measured by the CS analysis, respectively, and the amount of $Li_2CO_3$ may be 0.1 to 1.0% by weight, based on the total weight of the cathode active material, and the amount of $Li_2SO_4$ may be 0.1 to 1.3% by weight, based on the total weight of the cathode active material.

On the other hand, the ICP-OES analysis may be performed by using a solution obtained by dispensing a cathode active material sample and dissolving same in ultrapure water. Specifically, for example, the ICP-OES analysis may comprise impregnating 1:50 to 1:500 parts by weight of the cathode active material sample and ultrapure water, for example, 1:50 to 300 parts by weight, 1:50 to 200 parts by weight or 1:80 to 150 parts by weight, for 1 to 60 minutes, for example 1 to 40 minutes, 5 to 30 minutes, or 5 to 15 minutes. The value analyzed by the ICP-OES indicates the total amount of lithium (Li wt%) in the cathode active material, i.e., the amounts of all Li compounds such as LiOH, $Li_2CO_3$, $Li_2SO_4$ and $Li_2O$.

The ICP-OES analysis is performed by applying high thermal energy to the sample by using a high-temperature plasma induced by an argon gas as an inert gas to generate atoms and ions in the sample in an excited state, and then detecting the line emitted by the atoms and ions returning to a low energy level to analyze the components, which allows the total residual Li component contained in the cathode active material sample to be measured.

In one embodiment of the present invention, the treatment of the cathode active material sample with ultrapure water may be performed by adding ultrapure water in a range of 0.1 to 100 ml, based on 100 mg of the dispensed sample and then stirring the mixture at room temperature for about 5 minutes. After filtering the solution treated with ultrapure water to remove undissolved components, component analysis may be performed by introducing the remaining filtrate into an ICP-OES analyzer commonly used in the art.

The amount of $Li_2O$ is calculated by subtracting the amount of Li corresponding to LiOH, $Li_2CO_3$ and $Li_2SO_4$ from the total residual Li component in the cathode active material sample measured by the ICP-OES analysis, and the calculated amount of $Li_2O$ may be 0.2 to 0.5% by weight, based on the total weight of the cathode active material.

In the present application, the order of the steps of the ICP-OES analysis, CS analysis and ONH analysis is not particularly limited.

In order to solve the problem that, since $Li_2O$ is mostly changed to LiOH when in contact with water, $Li_2O$ and LiOH are hardly distinguished from each other, the ONH analysis and Karl Fischer analysis are performed on the cathode active material containing water, and the accuracy of measuring the amount of LiOH is improved through the correction of excluding the amount of LiOH generated due to contact with moisture, based on the amount value of water measured by the Karl Fischer analysis.

Specifically, the amount of LiOH in the cathode active material is calculated as in Equation 1 to correct for changes in the amount due to moisture.

[Equation 1]

$$LiOH(wt\%) = \frac{\{(H1, wt\%) - (H2, wt\%)\} * MW_{LiOH}}{AM_H}$$

wherein,

H1 is the amount of hydrogen (wt%) analyzed by the ONH analyzer,
H2 is the amount of hydrogen (wt%) analyzed by the Karl Fischer method,
$MW_{LiOH}$ is the weight average molecular weight of LiOH, and
$AM_H$ is the atomic mass of hydrogen.

The above-described analysis process may comprise analyzing the amounts of all four residual lithium compounds (i.e., LiOH, Li2CO3, Li2SO4 and $Li_2O$) present in the cathode active material of the lithium secondary battery but not involved in charging and discharging, and the performance of the cathode and lithium secondary battery may be accurately evaluated by applying the analyzed amounts of the residual lithium compounds.

Further provided is a cathode active material for a lithium secondary battery analyzed by the above-described method.

In the cathode active material, the amount of residual LiOH may be 0.1 to 0.4% by weight, the amount of residual

$Li_2CO_3$ may be 0.1 to 1.0% by weight, the amount of residual $Li_2SO_4$ may be 0.1 to 1.3% by weight, and the amount of residual $Li_2O$ may be 0.2 to 0.5% by weight, based on the total amount of the cathode active material.

Hereinafter, embodiments will be described in detail to aid understanding of the present invention.

(Examples)

(Step 1) ONH analysis

First, four types of cathode active material samples of $Li[Ni_{0.86}Co_{0.05}Mn_{0.07}Al_{0.02}]O_2$ (Samples 1 and 2: calcinated products; and Samples 3 and 4: washed products) were prepared for analysis.

10 to 50 mg of each of the samples (in a solid state) was dispensed, introduced into the heating furnace of an ONH analyzer (ONH836, LECO) and melted at 2,200 °C, and the discharged hydrogen gas was moved together with a carrier gas (He) and analyzed to measure the amount of H in the samples.

(Step 2) CS analysis

200 to 300 mg of each of the samples (in a solid state) was dispensed, introduced into a CS analyzer (CS844, LECO) and then calcined together with a flame retardant under an oxygen atmosphere to obtain a carbon (C) compound and a sulfur (S) compound, and such compounds were analyzed to measure the amounts of C component and S component in the samples.

(Step 3) ICP-OES analysis

100 to 200 mg of each of the samples was dispensed and dissolved in 10 ml of ultrapure water.

After 5 minutes, each sample solution was filtered with a 0.45 $\mu$m PTFE filter to remove undissolved components, and then the remaining filtrate (i.e., a supernatant) was introduced into an ICP-OES instrument (e.g., AVIO 500, Perkin Elmer) to perform component analysis. Thus, the components of the total residual Li contained in the samples were measured.

<Conditions for ICP-OES analysis>

Forward Power: 1300W
Torch Height: 15mm
Plasma gas flow: 15.00L/min
Sample gas flow: 0.8L/min
Assist gas flow: 0.20L/min
Pump speed: 1.5 mL/min

(Step 4) Calculation of the amounts of LiOH, $Li_2CO_3$, $Li_2SO_4$ and $Li_2O$

The amounts of LiOH, $Li_2CO_3$ and $Li_2SO_4$ in the samples were calculated by using the measurement results of the H, C and S components, respectively, in the four samples, and the amount of Li corresponding to LiOH, $Li_2CO_3$ and $Li_2SO_4$ was subtracted from the total residual Li components to calculate the amount of $Li_2O$. The results are shown in Table 1 below.

[Table 1]

| | CS analyzer | | | ONH analyzer | | | CS analyzer | | | Li of LC+LH+LS | ICP-OES | Li of LO | LO |
|---|---|---|---|---|---|---|---|---|---|---|---|---|---|
| | C | LC | Li of LC | H | LH | Li of LH | S | LS | Li of LS | | Total residual Li | | |
| Sample 1 | 1141 | 7019 | 1319 | 151 | 3587 | 1040 | 3518 | 12062 | 1523 | 3881 | 5676 | 1794 | 3863 |

(continued)

| | CS analyzer | | | ONH analyzer | | | CS analyzer | | | Li of LC+LH+LS | ICP-OES | Li of LO | LO |
|---|---|---|---|---|---|---|---|---|---|---|---|---|---|
| | C | LC | Li of LC | H | LH | Li of LH | S | LS | Li of LS | | Total residual Li | | |
| Sample 2 | 1546 | 9511 | 1787 | 119 | 2827 | 819 | 3770 | 12926 | 1632 | 4238 | 6342 | 2104 | 4529 |
| Sample 3 | 186 | 1144 | 215 | 66 | 1568 | 454 | 332 | 1138 | 144 | 813 | 1974 | 1161 | 2499 |
| Sample 4 | 289 | 1778 | 334 | 81 | 1924 | 558 | 347 | 1190 | 150 | 1042 | 2032 | 990 | 2130 |
| * The unit of measurement: ppm <br> ** LH: LiOH, LC: $Li_2CO_3$, LS: $Li_2SO_4$, LO: $Li_2O$ | | | | | | | | | | | | | |

Table 1 above shows that Samples 1 and 2 that are the calcinated products obtained by calcinating the precursors had a large amount of residual lithium, and Samples 3 and 4 that are washed products obtained by washing and drying the calcinated products had a small amount of residual lithium.

(Step 5)

A calibration was conducted three times by using a graphite crucible. Calibration was performed by using O, C, and N standard samples. 0.02 g of the non-dried cathode active material of $Li[Ni_{0.86}Co_{0.05}Mn_{0.07}Al_{0.02}]O_2$ was placed in a tin capsule and sealed. The tin capsule was then put into a nickel basket. The nickel basket was put into the sample inlet to perform H analysis. Quantitative analysis on the sample was repeatedly performed twice or more.

1 g of the cathode active material of $Li[Ni_{0.86}Co_{0.05}Mn_{0.07}Al_{0.02}]O_2$ was dispensed into a sample bottle, sealed with a rubber stopper, and loaded into an instrument (e.g., C30 coulometric KF titrator, Mettler toledo) together with an empty bottle sample. After vaporizing the moisture while heating the sample at 200 °C for 600 seconds, the amount of moisture was measured by iodine titration. After correcting for moisture, the amount of LiOH was calculated as in Equation 1.

[Equation 1]

$$LiOH(wt\%) = \frac{\{(H1,\ wt\%) - (H2,\ wt\%)\} * MW_{LiOH}}{AM_H}$$

wherein,

H1 is the amount of hydrogen (wt%) analyzed by the ONH analyzer,
H2 is the amount of hydrogen (wt%) analyzed by the Karl Fischer method,
$MW_{LiOH}$ is the weight average molecular weight of LiOH, and
$AM_H$ is the atomic mass of hydrogen.

(Comparative Examples)

After preparing four types of cathode active material samples of $Li[Ni_{0.86}Co_{0.05}Mn_{0.07}Al_{0.02}]O_2$, 5g of each sample was dispensed and added to 1000ml of ultrapure water to dissolve same.

After each sample solution was filtered through a 0.45 $\mu$m PTFE filter to remove undissolved components, pH titration was performed on the remaining filtrate (i.e., a supernatant) to measure the amounts of LiOH and $Li_2CO_3$ in the sample.

The amount results of the components calculated in the examples and comparative examples and indicated by the unit of weight% (wt%) are shown in Table 2 below.

[Table 2]

| | Examples (wt%) | | | | | Comparative Examples (wt%) | |
| --- | --- | --- | --- | --- | --- | --- | --- |
| | LC ($Li_2CO_3$) | LS ($Li_2SO_4$) | LH (LiOH) | LO ($Li_2O$) | LH+LO | LC ($Li_2CO_3$) | LH (LiOH) |
| Sample 1 | 0.702 | 1.206 | 0.359 | 0.386 | 0.745 | 0.699 | 0.805 |
| Sample 2 | 0.951 | 1.293 | 0.283 | 0.453 | 0.736 | 0.987 | 0.823 |
| Sample 3 | 0.114 | 0.114 | 0.157 | 0.250 | 0.407 | 0.144 | 0.385 |
| Sample 4 | 0.178 | 0.119 | 0.192 | 0.213 | 0.405 | 0.208 | 0.381 |

From Table 2 above, the amounts of all four residual lithium compounds of LiOH, $Li_2CO_3$, $Li_2SO_4$ and $Li_2O$ can be measured by combining the results of component analysis performed on a cathode active material sample in dry and wet methods according to the examples. Further, it is confirmed that the amount of residual LiOH is 0.1 to 0.4% by weight, the amount of residual $Li_2CO_3$ is 0.1 to 1.0% by weight, the amount of residual $Li_2SO_4$ is 0.1 to 1.3% by weight, and the amount of residual $Li_2O$ is 0.2 to 0.5% by weight, based on the total amount of the sample.

On the other hand, in the comparative examples, since only wet pH titration analysis was performed, only the amounts of LiOH and $Li_2CO_3$ were measured. It is confirmed that the amount of LiOH measured according to the comparative examples includes the amount of $Li_2O$ changed to LiOH and is similar to the sum of the amounts of LiOH and $Li_2O$ according to the examples. Accordingly, the total amount of LiOH, $Li_2O$ and $Li_2CO_3$ measured according to the examples was compared with the total amount of LiOH and $Li_2CO_3$ measured according to the comparative examples, as the amount of residual lithium, and the results are shown in Table 3 below.

[Table 3]

| | Examples (wt%) | Comparative Examples (wt%) | RSD (%)[1] |
| --- | --- | --- | --- |
| | LC+LH+LO | LC+LH | |
| Sample 1 | 1.447 | 1.504 | 2.732 |
| Sample 2 | 1.687 | 1.810 | 4.974 |
| Sample 3 | 0.521 | 0.529 | 1.077 |
| Sample 4 | 0.583 | 0.589 | 0.724 |
| 1) RSD (Relative standard deviation) = Standard deviation/average X 100 | | | |

From Table 3 above, it is confirmed that the relative standard deviation (RSD) of the amount of residual lithium of the examples is within 5% as compared to the comparative examples.

## Claims

1. A method for analyzing a residual lithium compound in a cathode active material for a lithium secondary battery, comprising:

analyzing a cathode active material sample with an Oxygen/Nitrogen/Hydrogen analyzer and a Karl Fischer analyzer to measure an amount of hydrogen components;
analyzing the cathode active material sample with a Carbon-Sulfur analyzer to measure an amount of carbon components and an amount of sulfur components;
analyzing the cathode active material sample with an Inductively Coupled Plasma Optical Emission Spectrometer to measure an amount of lithium components; and
calculating an amount of each of LiOH, $Li_2CO_3$ and $Li_2SO_4$ in the cathode active material sample by using a measurement result of the amount of each of the hydrogen, carbon, and sulfur components, and calculating an amount of $Li_2O$ in the cathode active material sample by using a measurement result of the amount of lithium components, and
calculating the amount of LiOH by Equation 1:

[Equation 1]

$$LiOH(wt\%) = \frac{\{(H1, wt\%) - (H2, wt\%)\} * MW_{LiOH}}{AM_H}$$

wherein,

H1 is the amount of hydrogen components (wt%) analyzed by the Oxygen/Nitrogen/Hydrogen analyzer,

H2 is the amount of hydrogen components (wt%) analyzed by the Karl Fischer analyzer,

$MW_{LiOH}$ is a weight average molecular weight of LiOH, and

$AM_H$ is an atomic mass of hydrogen.

2. The method for analyzing a residual lithium compound of claim 1, wherein the Inductively Coupled Plasma Optical Emission Spectrometer analysis is performed with a solution having the cathode active material sample dissolved in an ultrapure water.

**Patentansprüche**

1. Verfahren zum Analysieren einer restlichen Lithiumverbindung in einem Kathodenaktivmaterial für eine Lithiumsekundärbatterie, umfassend:

Analysieren einer Kathodenaktivmaterialprobe mit einem Sauerstoff/Stickstoff/Wasserstoff-Analysator und einem Karl-Fischer-Analysator, um eine Menge an Wasserstoffkomponenten zu messen;

Analysieren der Kathodenaktivmaterialprobe mit einem Kohlenstoff-Schwefel-Analysator, um eine Menge an Kohlenstoffkomponenten und eine Menge an Schwefelkomponenten zu messen;

Analysieren der Kathodenaktivmaterialprobe mit einem optischen Emissionsspektrometer mit induktiv gekoppeltem Plasma, um eine Menge an Lithiumkomponenten zu messen; und

Berechnen einer Menge von jeweils LiOH, $Li_2CO_3$ und $Li_2SO_4$ in der Kathodenaktivmaterialprobe unter Verwendung eines Messergebnisses der Menge von jeweils den Wasserstoff-, Kohlenstoff- und Schwefelkomponenten, und Berechnen einer Menge an $Li_2O$ in der Kathodenaktivmaterialprobe unter Verwendung eines Messergebnisses der Menge an Lithiumkomponenten, und

Berechnen der Menge an LiOH durch Gleichung 1:

[Gleichung 1]

$$LiOH(wt\%) = \frac{\{(H1, wt\%) - (H2, wt\%)\} * MW_{LiOH}}{AM_H}$$

wobei

H1 die Menge an Wasserstoffkomponenten (Gew.-%) ist, die durch den Sauerstoff/Stickstoff/Wasserstoff-Analysator analysiert wird,

H2 die Menge an Wasserstoffkomponenten (Gew.-%) ist, die durch den Karl-Fischer-Analysator analysiert wird,

$MW_{LiOH}$ ein gewichtsgemitteltes Molekulargewicht von LiOH ist, und

$AM_H$ eine Atommasse von Wasserstoff ist.

2. Verfahren zum Analysieren einer restlichen Lithiumverbindung nach Anspruch 1, wobei die Analyse des optischen Emissionsspektrometers mit induktiv gekoppeltem Plasma mit einer Lösung durchgeführt wird, bei der die Kathodenaktivmaterialprobe in einem ultrareinen Wasser gelöst ist.

**Revendications**

1. Procédé d'analyse d'un composé de lithium résiduel dans un matériau actif de cathode pour une batterie rechargeable au lithium, consistant à :

analyser un échantillon de matériau actif de cathode avec un analyseur d'oxygène/azote/hydrogène et un analyseur de Karl Fischer pour mesurer une quantité de composants d'hydrogène ;

analyser l'échantillon de matériau actif de cathode avec un analyseur de carbonesoufre pour mesurer une quantité de composants de carbone et une quantité de composants de soufre ;

analyser l'échantillon de matériau actif de cathode avec un spectromètre d'émission optique à plasma à couplage inductif pour mesurer une quantité de composants de lithium ; et

calculer une quantité de chacun de LiOH, $Li_2CO_3$ et $Li_2SO_4$ dans l'échantillon de matériau actif de cathode en utilisant un résultat de mesure de la quantité de chacun des composants d'hydrogène et de carbone et de soufre, et calculer une quantité de $Li_2O$ dans l'échantillon de matériau actif de cathode en utilisant un résultat de mesure de la quantité de composants de lithium, et

calculer la quantité de LiOH par l'Équation 1 :

[Équation 1]

$$LiOH(wt\%) = \frac{\{(H1, wt\%) - (H2, wt\%)\} * MW_{LiOH}}{AM_H}$$

où,

H1 est la quantité de composants d'hydrogène (% en poids) analysée par l'analyseur d'oxygène/azote/hydrogène,

H2 est la quantité de composants d'hydrogène (% en poids) analysée par l'analyseur de Karl Fischer,

$MW_{LiOH}$ est un poids moléculaire moyen en poids de LiOH, et

$AM_H$ est une masse atomique de l'hydrogène.

2. Procédé d'analyse d'un composé de lithium résiduel selon la revendication 1, dans lequel l'analyse du spectromètre d'émission optique à plasma à couplage inductif est effectuée avec une solution ayant l'échantillon de matériau actif de cathode dissous dans une eau ultrapure.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20200143763 A
- WO 2021025370 A1
- KR 20170048244 A
- US 2019058191 A1
- JP 2015018803 A
- KR 20200090125 A